# EUROPEAN PATENT SPECIFICATION

(11) **EP 2 310 262 B1**
(45) Date of publication and mention of the grant of the patent: **14.03.2018**
(21) Application number: 09797311.9
(22) Date of filing: 16.07.2009
(51) Int. Cl.: B64C 3/26, A63H 27/18, B64C 3/00, F03D 1/02, F03D 1/04

(54) **INTEGRALLY RIBBED ROGALLO WING ARRAY**
INTEGRAL GERIPPTE ROGALLOFLÜGELANORDNUNG
RÉSEAU D'AILES ROGALLO À NERVURES INTÉGRÉES

(30) Priority: 17.07.2008 CA 2638229; 28.07.2008 US 181095
(43) Date of publication of application: 20.04.2011
(73) Proprietor: Slingshot Wind Energy Systems Inc., Calgary, Alberta T2Y 2W8 (CA)
(72) Inventor: TOCHER, Angus, J., Calgary Alberta T2Y 2W8 (CA)
(74) Representative: Rankin, Douglas
(86) International application number: PCT/CA2009/000976
(87) International publication number: WO 2010/006427

(56) References cited:
- EP-A1- 1 359 320
- WO-A1-00/75507
- WO-A1-84/02750
- CA-A1- 2 188 851
- DE-A1- 19 645 415
- US-A- 3 135 483
- US-A- 4 209 148
- US-A- 5 620 153
- US-A1- 2003 042 366
- US-A1- 2005 207 881

## Description

### TECHNICAL FIELD

This relates to the technical field of Rogallo wings.

### BACKGROUND

A conventional aircraft wing has an upper skin and a lower skin, and is usually made from metal. Due to the two skins, a conventional aircraft wing may be too heavy for certain applications and is more difficult to construct than a wing formed from a single skin. A conventional aircraft wing can be prohibitively expensive and too time consuming to be advantageously used in some applications, such as for example in wind turbines.

A traditional Rogallo wing is formed from a conical single sail-fabric connected between various supporting ribs. The Rogallo wing is the type of wing that was used in early hang gliders and is now most commonly seen in kids' kites. The Rogallo wing is a simpler design than a conventional aircraft wing, but requires more maintenance and has a shorter life-span than a conventional aircraft wing.
DE 196 45 415 A1 discloses a generator with a rotor or impeller, and a funnel-shaped nozzle-like sail in front of it, to increase the intake area of the generator. The sail is maintained in inflated condition due to the angle of incidence between it and the wind flow. Anchoring cables have varying anchoring points, which are used to change size, expansion, shape, and position of the sail during operation.
EP 1 359 320 A1 discloses a device for extracting energy from a fluid flow passing in a first direction, comprising at least one turbine embedded in the fluid flow, the fluid flow maintaining a pressure difference between the input end of the turbine and the output end of the turbine; the turbine being at least partially shielded by a flow shroud means; said flow shroud means effecting an increase of said pressure difference by causing a partial area of the cross section of the total fluid flow to bypass the turbine; the bypassing flow being deflected by said flow shroud means into a second direction different from the first direction; and said flow shroud means consisting of at least one flow shroud means element shaped like a sail or similar means.
WO 00/75507 discloses a diffuser augmented fluid-driven turbine for recovering energy from a fluid stream comprising: fluid-driven rotor blades contained in a housing; two support ring assemblies positioned on either side of the housing and axially mounted with respect to the blades; a tensioned fabric shroud extending between rings of the support ring assemblies; and, a spar assembly that extends longitudinally to the blades and which is adjustably mounted to the rings of the support ring assemblies. The spar assembly has a passage through which fluid upstream of the rotor blades can be injected into a diffuser section of the turbine without having to pass through the blades. The turbine is supported by a tower.

### SUMMARY

In an embodiment, there is provided a wind energy extraction apparatus comprising the features of claim 1.

### BRIEF DESCRIPTION OF THE FIGURES

Embodiments will now be described with reference to the figures, in which like reference characters denote like elements, by way of example, and in which:
Fig 1 is a perspective view of a Rogallo wing with folded edges;
Fig 2 is a perspective view of an array of Rogallo wings with folded edges;
Fig 3 is a perspective view of an array of Rogallo wings supported between two support fins;
Fig 4 is a perspective view of a plurality of Rogallo wings on a wind turbine;
Fig 5 is a end elevation view of a plurality of Rogallo wings on a wind turbine;
Fig 6 is a partial perspective view of a plurality of Rogallo wings on a wind turbine;
Fig 7 is a partial perspective view of a brace supporting a plurality of Rogallo wings on a wind turbine;
Fig 8 is a partial perspective view of braces and an impellor on a wind turbine with Rogallo wings; and
Fig. 9 is a side perspective view of a plurality of Rogallo wings on a wind turbine.

### DETAILED DESCRIPTION

Immaterial modifications may be made to the embodiments described here without departing from what is covered by the claims.

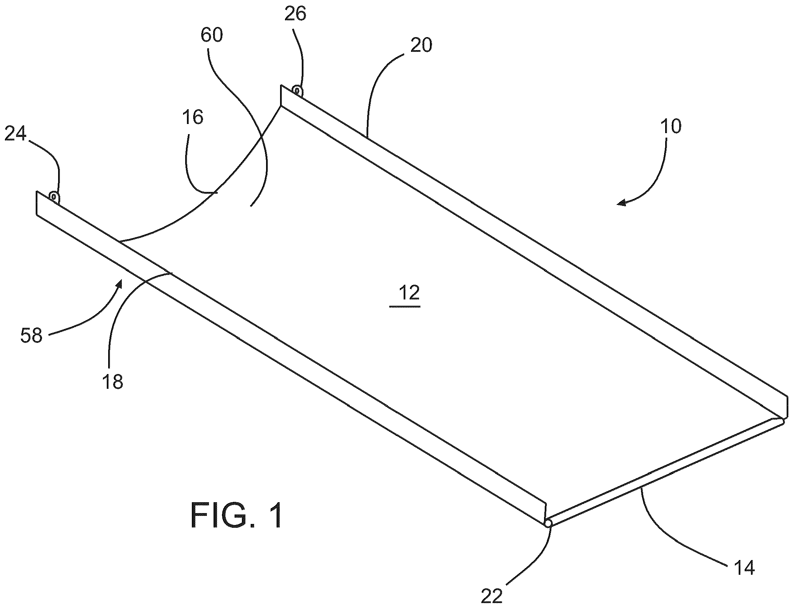

Figs. 1 - 3 show Rogallo wings 10. Referring to Fig. 1, the Rogallo wing 10 has an aerodynamic sheet 12 that has a leading end 14 and a trailing edge 16. The leading end 14 may be for example, as shown in Fig. 1, a leading edge, which may be flat for example. In other embodiments, the leading end may be a point. In some embodiments, the leading end 14 has a shorter length than the trailing end 16. The trailing edge 16 is curved to form a sheet of increasing concavity away from the leading edge 14. The concavity may be increased for example gradually, or in steps or other suitable configurations. At least two folded edges 18, 20 extend between the leading edge 14 and the trailing edge 16 on opposed sides of the aerodynamic sheet 12. The two folded edges 18, 20 act as integral ribs of the Rogallo wing 10. In the embodiment shown in Fig. 1, the Rogallo wing has a pan shape, in which the wing has a leading edge 14 that is not curved and a trailing edge 16 that is curved. In some embodiments, curved may mean, for example, stepped, bent, or any type of concave shape. The integral ribs 18, 20 effectively form external ribs of the Rogallo wing. The integral ribs help prevent the structure of the wings from bending when air pressure, such as wind, is applied against the wings. The increasing concavity between the leading edge 14 and the trailing edge 16 also imparts significant strength to the wing panel. The combination of the increasing concavity and the integral ribs together give the required strength to the wing panel to prevent the force of the wind from permanently deforming the external ribs of the wing panels in a storm or very strong wind. The type, strength and thickness of the material used also have an effect on the strength of the wing panel.

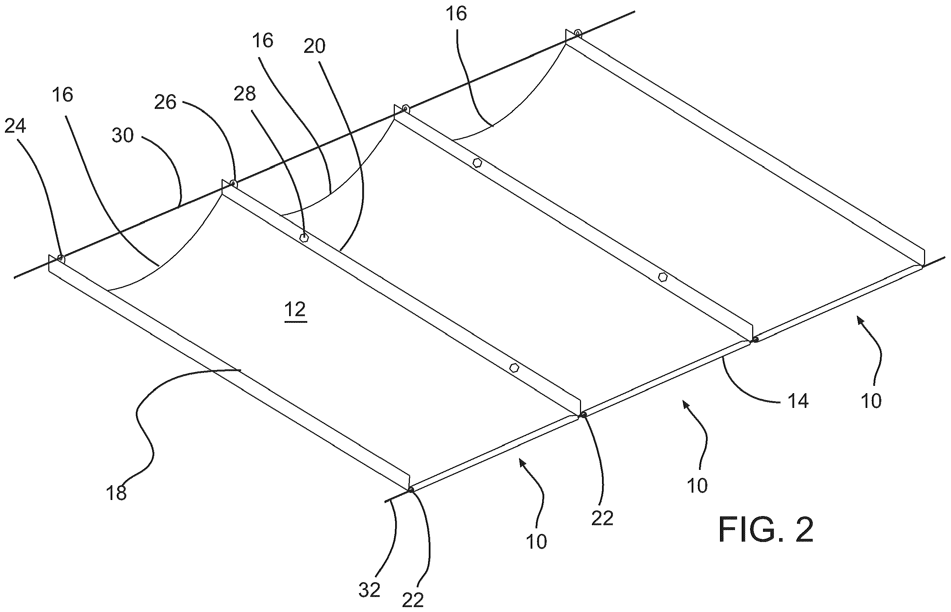

As shown in Fig. 2, the Rogallo wing 10 may have a hollow end 22 at the leading edge 14 of the aerodynamic sheet 12. Hollow end 22 may extend at least partially along the leading edge 14. Hollow end 22 may be formed by, for example, at least one ring or eyelet on leading edge 14. The rings or eyelets may be aligned, for example. In some embodiments, the hollow end 22 may be formed by folding the leading edge 14 back on itself. In some embodiments, a loop may be attached to each of the two folded edges 18, 20. Loops 24, 26 lie on the folded edges 18, 20 adjacent to the trailing edge 16 of the aerodynamic sheet 12. A wire may be connected through the loops 24, 26 on each of the folded edges. The wire may be, for example a first supporting cable 30 that supports the trailing edge 16 of the aerodynamic sheet by passing through the loops 24, 26. In some embodiments, a wire is disposed through the hollow ends 22 of each of the leading edges 14 of the array of interconnected wings 10. The wire may be, for example, a second supporting cable 32, second supporting cable 32 extending through the hollow ends 22 of the leading edge 14 of the Rogallo wings 10. Adjacent folded edges of adjacent wings may be connected together, by for example rivets 28 that connect the folded edge 20 of one Rogallo wing 10 with the folded edge 18 of an adjacent Rogallo wing. In some embodiments, each folded edge is formed by folding wing 10 once and then optionally folding the formed folded edge portion over top of itself one or more times to give the desired thickness. In some embodiments, the folded edge 18 may be formed by, or reinforced with, a structural angle of metal or other material connected to wing 10. Structural angles are generally formed by extrusion processes, and may be connected to wing 10 by riveting.

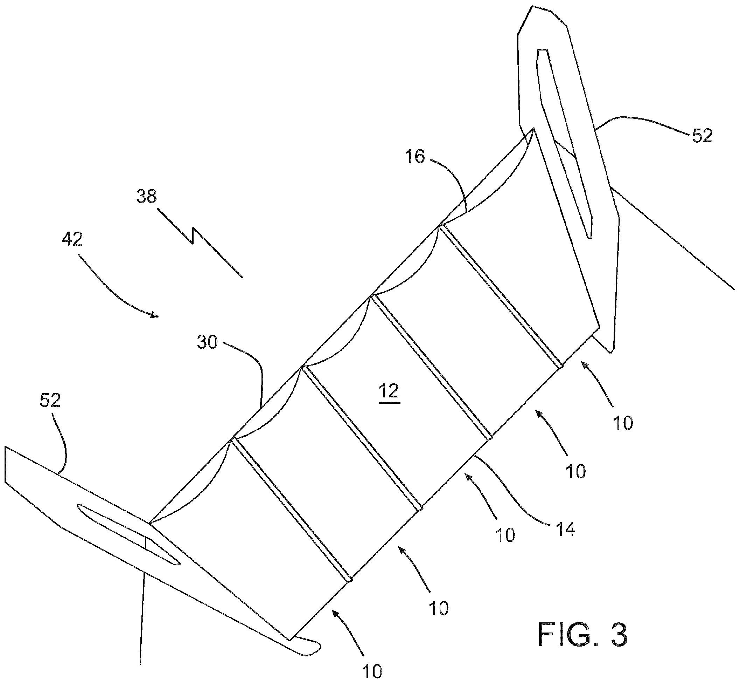

As shown in Fig. 3, support fins 52 are used to support an array 38 of interconnected Rogallo wings 10. Each of the arrays 38 of Rogallo wings may be supported by cables between supporting fins 52. The cables may further comprise at least first supporting cable 30 and second supporting cable 32, the Rogallo wings being supported between first supporting cable 30 and second supporting cable 32 (Fig. 2).

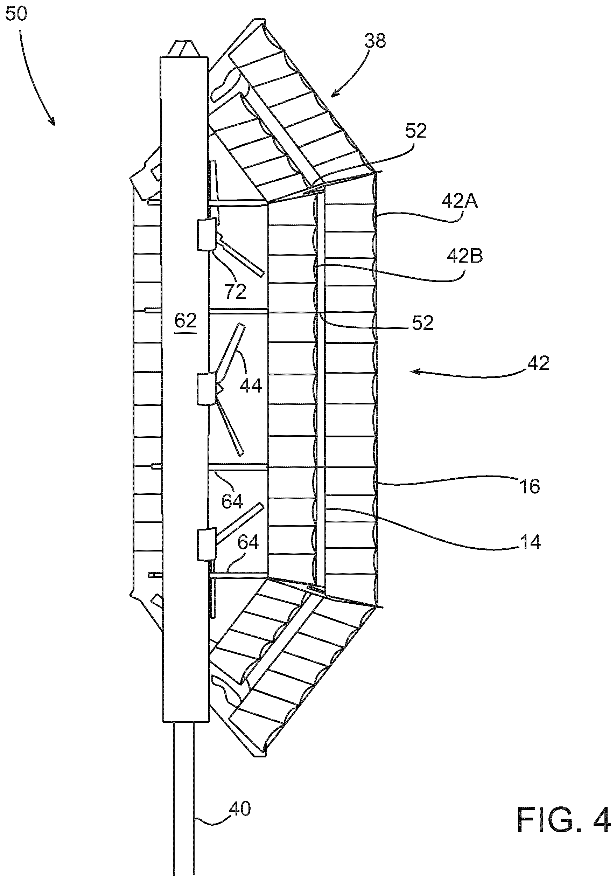

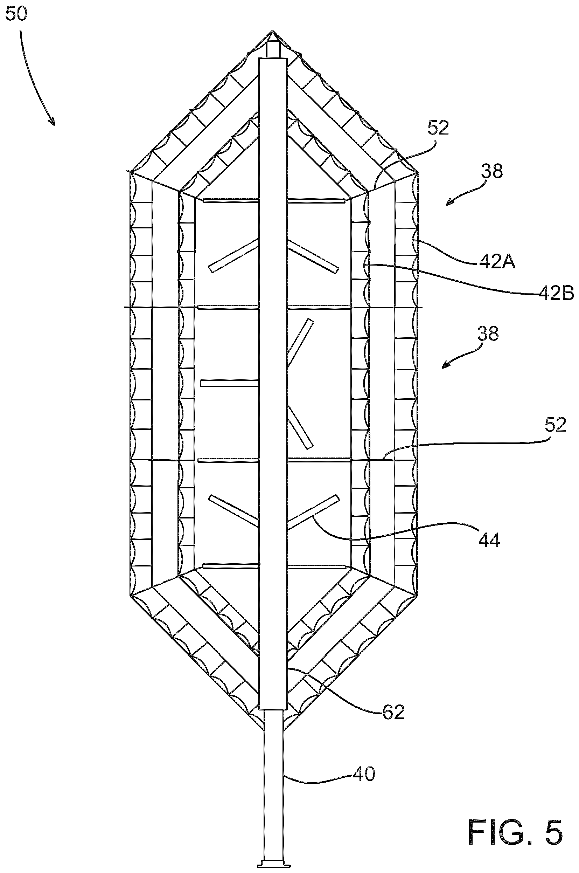

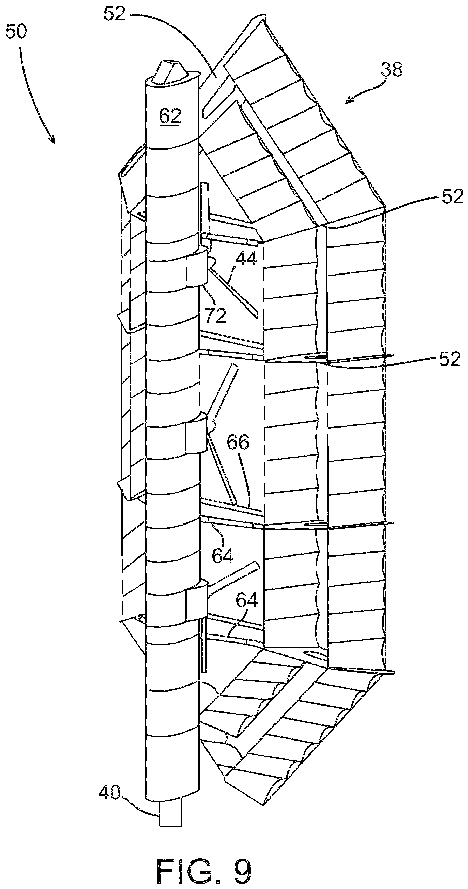

In Figs. 4 - 9, the Rogallo wings are shown in operation with a turbine 50. In such embodiments, a plurality of Rogallo wings may form the wing members of turbine 50. In Fig. 4, the embodiment illustrated shows a wind energy extraction apparatus comprising one or more concentrator wings 42. The concentrator wings 42 comprise Rogallo wings and react with a flow of wind to induce a drop in static air pressure that is then used to drive one or more impellors 44 and one or more power converters 72 shown encased in housing and connected to the one or more impellors 44. Arrays 38 of Rogallo wings are supported on support fins 52 connected to a fuselage 62. The fuselage 62 is supported on a support pole 40. Each array 38 of Rogallo wings 10 (Fig. 3) acts as a concentrator wing 42.

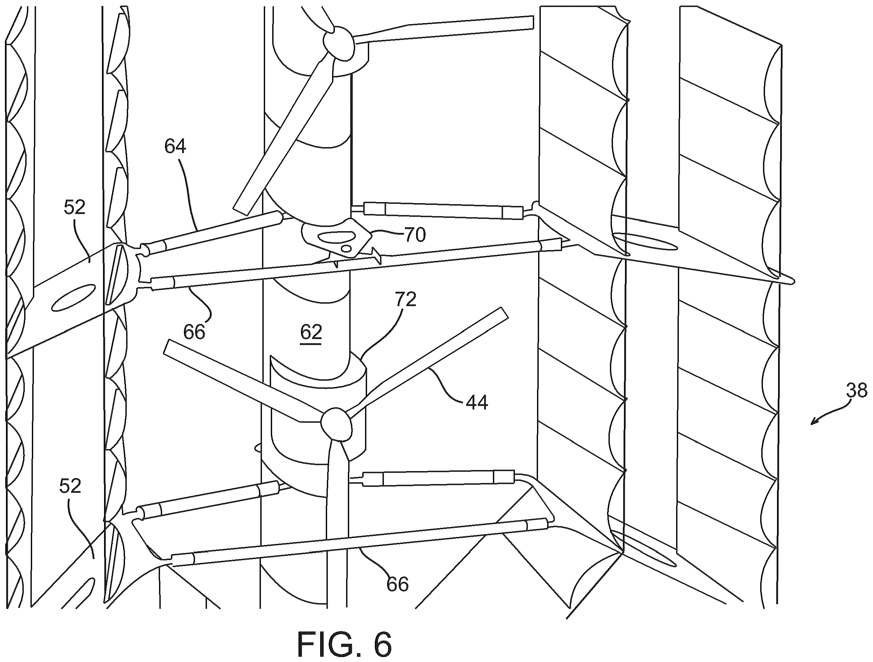

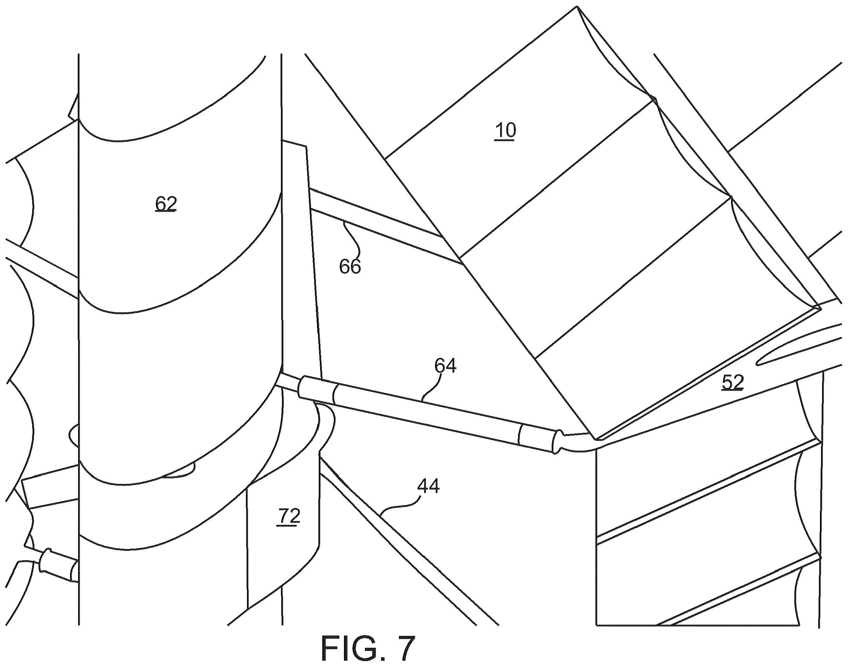

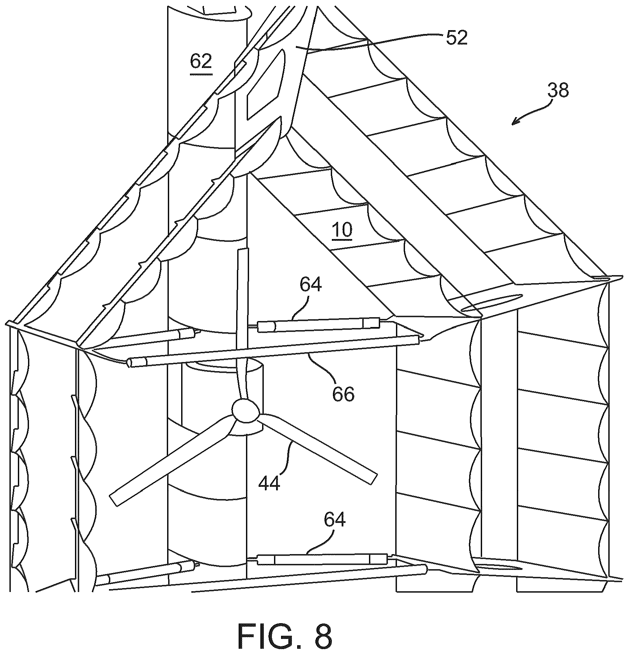

In Fig. 6 braces 64, 66 are shown supporting the support fins 52. Braces 64 connect the support fins 52 to the fuselage 62. Braces 66 connect between support fins 52 lying on opposed sides of the fuselage 62. A supporting brace 70 may connect the brace 66 to the fuselage 62 for additional support. Fig. 7 shows a corner support fin 52 supported by braces 62, 64. Fig. 8 shows a support fin 52 connected directly to the top of the fuselage 62. Although one example of a support structure comprising support fins and braces is described here, various different support structures may be used to support the concentrator wings 42.

The Rogallo wings 10 (Fig. 1) may be made, for example, from aluminum sheeting with one material thickness. In the embodiments shown, the Rogallo wings have no internal ribs. The aerodynamic shape of the wing is created by having a relatively flat leading edge, developing into a pronounced bow shape at the trailing edge of the wing. The aerodynamic sheet replicates the curvature of a conventional wing, but instead uses only one sheet of material. To a point, increasing the degree of bow in the trailing edge of a Rogallo type wing is equivalent to increasing the curvature of a conventional wing.

The Rogallo wings 10 may be constructed from a single flat sheet of material. The material may be curved into a Rogallo wing shape and then have the edges folded and bent to create an integral or external rib. The combination of the external rib and the natural cupped shape of the Rogallo wing, when made from a solid sheet material such as aluminum, provide a strong, lightweight and inexpensive structure. As shown in Fig. 2, the leading and trailing edges 14, 16 may be supported by cables 30, 32. In other embodiments, stiff members such as rods or pipes may be used to support the Rogallo wings. Other materials other than aluminum may be used to construct the aerodynamic sheets 12. A variety of materials may be used to form the aerodynamic sheets, although factors such as the cost of tooling the materials and level of degradation of the materials due to sun exposure may be considered when choosing a new design, depending on budgetary concerns and whether the wings are to be used in an indoor or outdoor setting. Metals, composites, fiberglass materials and synthetics are examples of types of materials that may be used to form the aerodynamic sheets. Stiff materials are preferable due to their longer life-span and reduced maintenance.

The arrays 38 (Fig. 4) of Rogallo wings 10 may be installed as a group, using two cables 30, 32 (Fig. 2), one running at the leading edge 14 and one at the trailing edge 16. The wing may then be installed between two rigid structures, such as the support fins 52 shown in Fig. 4. As long as the cables are tensioned, a full wing is created which does not require internal spars. The use of cables adds to the flexibility of the wings, so that the wings can flex to a degree without damaging the individual Rogallo wing panels. The Rogallo wings have the advantages and simplicity of sailcloth wings but also may be made using durable materials, such as aluminum, to give long life and good durability. The integrals ribs give the aerodynamic sheet structure and form, which allow the wings to be made without internal ribs. In some embodiments internal ribs may be used to give additional support.

The adjacent folded edges of adjacent Rogallo wings may be connected by means other than rivets 28 shown in Fig. 2. In some embodiments, cables alone may join the individual Rogallo wings together without additional supporting structures. In other embodiments, the adjacent folded edges of the Rogallo wings may be connected by other means such as bolts and screws, or the folded edges may be welded together.

Referring to Fig. 4, for completeness of disclosure, a description of how a wind turbine 50 having one or more concentrator wings 42 operates follows. Concentrator wings 42 operate fundamentally the same as aircraft wings. The concentrator wings 42 are arrays 38 of Rogallo wings 10. Referring to Fig. 1, each of the Rogallo wings 10 have a first surface 58 that is convex shaped at the trailing edge 16 to accelerate the flow of wind, and a corresponding second surface 60 that is concave shaped on the opposite side of the aerodynamic sheet at the trailing edge 16 that tends to slightly decelerate the flow of wind past the second surface 60. Referring to Fig. 4, first and second concentrator wings 42A and 42B may operate in series to enhance the pressure differential effect created as wind travels over surfaces 58 and 60 (Fig. 1). In order to accomplish this effect, first and second concentrator wings 42A and 42B may be staggered, for example. First concentrator wing 42A induces a lower static pressure region over the first surfaces 58 of the wing that in turn causes an acceleration of the wind flow past the second surfaces 60 of an adjacent second concentrator wing 42B. This in turn causes an increased acceleration of the flow of wind over the first surfaces 58 of the second concentrator wing 42B. In a wind turbine 50, the accelerated flow is used to increase the static pressure differential occurring between opposed sides of the impellors 44. The static pressure gradient between the opposed sides of the impellor 44 causes the wind to be focused more powerfully to drive impellors 44 and power converters 72.

The Rogallo wing arrays may be used in different turbine designs. In some embodiments, a turbine may have a single drive impellor 44 connected to a single power converter 72. In some embodiments, a single row of concentrator wings 42 may draw wind across the impellors 44. Also, in some embodiments, the turbine 50 may be connected directly to a power utility pole and be arranged so that power is provided to the utility power.

In the claims, the word "comprising" is used in its inclusive sense and does not exclude other elements being present. The indefinite article "a" before a claim feature does not exclude more than one of the feature being present. Each one of the individual features described here may be used in one or more embodiments and is not, by virtue only of being described here, to be construed as essential to all embodiments as defined by the claims.

## Claims

1. A wind energy extraction apparatus comprising:
one or more concentrator wings (42) that react with a flow of wind to induce a drop in static air pressure that is then used to drive one or more impellors (44) and one or more power converters (72), the one or more concentrator wings (42) comprising an array of Rogallo wings (10) connected together; wherein the Rogallo wings (10) each comprise:
an aerodynamic sheet (12) having a leading edge (14) and a trailing edge (16), the trailing edge (16) curved to form a sheet of increasing concavity away from the leading edge (14; and
at least two folded edges (18, 20) extending between the leading edge (14) and the trailing edge (16) on opposed sides of the aerodynamic sheet, the at least two folded edges (18, 20) comprising integral ribs; and
adjacent Rogallo wings in the array of Rogallo wings (38) have adjacent folded edges (18, 20) connected together.

2. The wind energy extraction apparatus of claim 1 in which the adjacent folded edges (18, 20) of adjacent wings are riveted (28) together.

3. The wind energy extraction apparatus of claim 1 or 2 in which each of the arrays of Rogallo wings (38) are supported by cables between supporting fins (52).

4. The wind energy extraction apparatus of claim 3 in which the cables further comprise at least a first supporting cable (32) and a second supporting cable (30), the first supporting cable (32) being disposed through a hollow end (22) on each of the leading ends of the array of interconnected Rogallo wings (38) and the second supporting cable (30) being disposed through a loop (24, 26) on each of the two folded edges (18, 20).

5. The wind energy extraction apparatus of any one of claims 1-4 in which the aerodynamic sheet (12) of each Rogallo wing (10) comprises a metal sheet.

6. The wind energy extraction apparatus of claim 5 in which the metal sheet (12) of each Rogallo wing (10) comprises an aluminum sheet.

## Patentansprüche

1. Windenergieextraktionsgerät, Folgendes beinhaltend:
einen oder mehrere Konzentratorflügel (42), welche mit einem Windfluss reagieren, um einen Abfall im statischen Luftdruck zu induzieren, der dann verwendet wird, um einen oder mehrere Impeller (44) und einen oder mehrere Leistungsumwandler (72) anzutreiben, wobei der eine oder die mehreren Konzentratorflügel (42) eine Anordnung von Rogalloflügeln (10) besitzen, welche miteinander verbunden sind, wobei jeder der Rogalloflügel (10) Folgendes beinhaltet:
ein aerodynamisches Blatt (12), besitzend eine Anfangskante (14) und eine Endkante (16), wobei die Endkante (16) gekrümmt ist, um ein Blatt von steigender Konkavität zu bilden, welche von der Anfangskante (14) abgewandt ist; und
mindestens zwei gefaltete Kanten (18, 20), welche sich zwischen der Anfangskante (14) und der Endkante (16) an gegenüberliegenden Seiten des aerodynamischen Blattes erstrecken, wobei die mindestens zwei gefalteten Kanten (18, 20) integral angeformte Rippen beinhalten; und
aneinandergrenzende Rogalloflügel in der Anordnung von Rogalloflügeln (38) aneinander angrenzende gefaltete Kanten (18, 20) besitzen, welche miteinander verbunden sind.

2. Windenergieextraktionsgerät nach Anspruch 1, bei welchem die aneinander angrenzenden gefalteten Kanten (18, 20) aneinander angrenzender Flügel miteinander vernietet (28) sind.

3. Windenergieextraktionsgerät nach Anspruch 1 oder 2, bei welchem jede der Anordnungen von Rogalloflügeln (38) von Kabeln zwischen Stützflossen (52) gestützt wird.

4. Windenergieextraktionsgerät nach Anspruch 3, bei welchem die Kabel zudem Folgendes beinhalten: mindestens ein erstes Stützkabel (32) und ein zweites Stützkabel (30), wobei das erste Stützkabel (32) durch ein hohles Ende (22) an jedem der vorderen Enden der Anordnung von miteinander verbundenen Rogalloflügeln (38) angeordnet ist und das zweite Stützkabel (30) durch eine Schlaufe (24, 26) an jeder der zwei gefalteten Kanten (18, 20) angeordnet ist.

5. Windenergieextraktionsgerät nach einem der Ansprüche 1 bis 4, bei welchem das aerodynamische Blatt (12) eines jeden Rogalloflügels (10) ein Metallblatt beinhaltet.

6. Windenergieextraktionsgerät nach Anspruch 5, bei welchem das Metallblatt (12) eines jeden Rogalloflügels (10) ein Aluminiumblatt beinhaltet.

## Revendications

1. Appareil d'extraction d'énergie éolienne comprenant :
une ou plusieurs ailes de concentrateur (42) qui réagissent avec un écoulement de vent pour induire une chute de la pression d'air statique qui est utilisée ensuite pour entraîner une ou plusieurs roues (44) et un ou plusieurs convertisseurs de puissance (72), les une ou plusieurs ailes de concentrateur (42) comprenant un réseau d'ailes Rogallo (10) connectées ensemble, dans lequel les ailes Rogallo (10) comprennent chacune :
une feuille aérodynamique (12) ayant un bord d'attaque (14) et un bord de fuite (16), le bord de fuite (16) étant incurvé pour former une feuille de concavité croissante à l'opposé du bord d'attaque (14), et
au moins deux bords pliés (18, 20) s'étendant entre le bord d'attaque (14) et le bord de fuite (16) sur des côtés opposés de la feuille aérodynamique, les au moins deux bords pliés (18, 20) comprenant des nervures intégrées, et
des ailes Rogallo adjacentes dans le réseau d'ailes Rogallo (38) ont des bords pliés adjacents (18, 20) connectés ensemble.

2. Appareil d'extraction d'énergie éolienne selon la revendication 1, dans lequel les bords pliés adjacents (18, 20) d'ailes adjacentes sont rivetés (28) ensemble.

3. Appareil d'extraction d'énergie éolienne selon la revendication 1 ou 2, dans lequel chacun des réseaux d'ailes Rogallo (38) est supporté par des câbles entre des ailerons de support (52).

4. Appareil d'extraction d'énergie éolienne selon la revendication 3, dans lequel les câbles comprennent en outre au moins un premier câble de support (32) et un second câble de support (30), le premier câble de support (32) étant disposé à travers une extrémité creuse (22) sur chacune des extrémités d'attaque du réseau d'ailes Rogallo interconnectées (38) et le second câble de support (30) étant disposé à travers un anneau (24, 26) sur chacun des deux bords pliés (18, 20).

5. Appareil d'extraction d'énergie éolienne selon l'une quelconque des revendications 1 à 4, dans lequel la feuille aérodynamique (12) de chaque aile Rogallo (10) comprend une feuille métallique.

6. Appareil d'extraction d'énergie éolienne selon la revendication 5, dans lequel la feuille métallique (12) de chaque aile Rogallo (10) comprend une feuille d'aluminium.
